# EUROPÄISCHE PATENTSCHRIFT

(11) **EP 2 815 641 B1**
(45) Veröffentlichungstag und Bekanntmachung des Hinweises auf die Patenterteilung: **15.03.2017**
(21) Anmeldenummer: 14075039.9
(22) Anmeldetag: 10.06.2014
(51) Int. Cl.: A01K 61/00, A01K 63/04

(54) **Verfahren zur Erzielung eines Wasseraustauschs und Aufzuchtvorrichtung für Wassertiere zur Durchführung des Verfahrens**
Method for water exchange and breeding device for aquatic animals for carrying out the method
Procédé d'obtention d'un renouvellement d'eau et dispositif d'élevage d'animaux aquatiques destiné à l'exécution du procédé

(30) Priorität: 19.06.2013 DE 102013010828
(43) Veröffentlichungstag der Anmeldung: 24.12.2014
(73) Patentinhaber: Alfred-Wegener-Institut Helmholtz-Zentrum für Polar- und Meeresforschung, 27570 Bremerhaven (DE)
(72) Erfinder: Janke, Michael, D - 27498 Helgoland (DE); Schmalenbach, Isabel, D - 27498 Helgoland (DE); Heinz-Dieter, Franke, D - 37574 Einbeck (DE)

(56) Entgegenhaltungen:
- WO-A1-2004/021774
- DE-U1- 7 611 949
- FR-A1- 2 500 722
- JP-A- 2009 044 979
- US-A1- 2002 066 414

## Beschreibung

Die Erfindung bezieht sich auf ein Verfahren zur Erzielung eines Wasseraustauschs in mehreren übereinander angeordneten Aufzuchttanks zur Hälterung von Wassertieren mit Zuleiten von Aufzuchtwasser bis zu einem maximalen Wasserstand aus einem unterhalb der Aufzuchttanks angeordneten Vorratstank zur Bevorratung von Aufzuchtwasser über eine Pumpe in zumindest einen der Aufzuchttanks und Rückleiten von Aufzuchtwasser aus zumindest einem der Aufzuchttanks bis zu einem minimalen Wasserstand in den Vorratstank ohne eine Pumpe unter Ausnutzung von kommunizierenden Wassersäulen zwischen den Aufzuchttanks und dem Vorratstank.

Weiterhin bezieht sich die Erfindung auf eine Vorrichtung zur Durchführung des Verfahrens für eine Aufzucht von Wassertieren mit mehreren zumindest übereinander angeordneten, nach oben offenen Aufzuchttanks, zumindest einem Vorratstank zur Bevorratung von Aufzuchtwasser, wobei der Vorratstank unterhalb der Aufzuchttanks angeordnet ist, mit einer Zuleitung für das Aufzuchtwasser aus dem Vorratstank in zumindest einen Aufzuchttank, wobei die Zuleitung mit nur einer Rohröffnung in den Aufzuchttank hineinragt, einer Rückleitung für das Aufzuchtwasser aus zumindest einem Aufzuchttank in den Vorratstank, und mit zumindest einer Pumpe in der Zuleitung, wobei in der Rückleitung kommunizierende Wassersäulen und keine elektrisch betriebenen Fördermittel angeordnet sind.

Überfischung und Umwelteinflüsse haben weltweit zum Einbruch von kommerziell wichtigen Populationen und zum Verlust von Fischereierträgen geführt, sodass mittlerweile viele Wassertiere in technisch angelegten Aquakulturen aufgezogen werden. Eine Art der Aquakultur ist die Hälterung von Wassertieren in Aufzuchttanks, speziell auch die in einzelne Abteile separierte Hälterung von Hummern der Gattung *Hommarus,* da diese Gattung zum Kannibalismus neigt. Dies bedingt neben Platzproblemen vor allem auch versorgungstechnische Probleme. Insbesondere muss ein guter, aber energie- und kosteneffizienter Wasseraustausch in den einzelnen Abteilen gewährleistet sein. Diese ist bei einer Massenhälterung in der Regel unproblematisch, da dort ein kontinuierlicher Durchfluss für den Wasseraustausch sorgen kann.

### Stand der Technik

Aus der WO 2011/161449 A1 ist beispielsweise eine Aufzuchtvorrichtung für Krustentiere bekannt, bei der die Aufzuchttanks mit einzelnen Abteilen in einem Wassertank übereinander aufgehängt sind. Der Wasseraustausch erfolgt durch eine kontinuierliche zirkulierende Durchströmung der Aufzuchttanks. Damit sind zum einen die einzelnen Aufzuchttanks schwer zugänglich, zum anderen sinkt die Wasserqualität von einem Aufzuchttank zum nächsten darunter liegenden Aufzuchttank. Aus der DE 1 152 572 B ist eine ähnliche Vorrichtung, allerdings nur zur Aufbewahrung von Hummern bekannt. Die Behälter sind als Stapel übereinander angeordnet und weisen Siebböden auf. Diese werden von oben mit Wasser besprüht, das dann durch die einzelnen Behälter hindurchrieselt. Auch hier sind die einzelnen Abteile schwer zugänglich und die Wasserqualität sinkt von oben nach unten. Bei einem Ausfall der Pumpen leeren sich die Aufzuchttanks vollständig. Eine separate Berieselung von Aufzuchttanks ist aus der US 6 257 170 B1 bekannt. Hier wird frisches Aufzuchtwasser über eine gemeinsame Zuleitung kontinuierlich in die Wasseroberfläche in die einzelnen Abteile der Aufzuchttanks eingerieselt, sodass auch hier kein Einblick mehr in die Abteile möglich ist. Aus jedem wasserundurchlässigen Abteil wird das Aufzuchtwasser kontinuierlich über einen Überlauf in eine gemeinsame Rückleitung geleitet und einer Drainage zugeführt, wobei aber kein Wasseraustausch zwischen den einzelnen Abteilen erfolgt. Zusätzlich ist eine weitgehende Entleerung (bei einer Umbesetzung der Aufzuchttiere) der einzelnen Abteile über eine ventilgesteuerte Rückleitung möglich. Aus der DE 103 92 651 T5 ist eine Aufzuchtvorrichtung mit einem einzelnen Aufzuchttank für Fischbrut bekannt, bei der das Aufzuchtwasser zwischen einem Aufzuchttank und einem Vorratstank in einem geschlossenen Kreislauf mit Pumpe und Reinigungsfiltern immer in einer Richtung umgewälzt wird.

Aus der Veröffentlichung "Improvement of rearing conditions for juvenile lobsters (*Hommarus gammarus*) by co-culturing with juvenile isopods (*Idotea emarginata*)" (von I. Schmalenbach et al. in Aquaculture 289 (2009) 297-303) ist es bekannt, einen Aufzuchttank mit einer Vielzahl von Abteilen für die Hummerhälterung einzusetzen. Dabei können auch mehrere Aufzuchttanks nebeneinander verwendet werden. Eine kontinuierliche Zufuhr des Aufzuchtwassers in die Aufzuchttanks erfolgt über eine Pumpe aus einem Vorratstank, der neben dem Aufzuchttank angeordnet ist. Das Aufzuchtwasser wird über eine matrixartige Zuleitung mit einer Vielzahl von Zuläufen oberhalb des Wasserspiegels in den Aufzuchttank eingerieselt. Die Rückleitung des Aufzuchtwassers erfolgt über einen Überlauf am Aufzuchttank. Die Rückleitung erfolgt in den Vorratstank ohne weitere elektrische Hilfsmittel. Der Vorratstank weist einen Überlauf und einen heizbaren Frischwasserzulauf auf. Im Fokus dieser Veröffentlichung stehen die optimierten Reinigungs- und Fütterungsvorgänge bei der separierten Hälterung von Hummern.

Die aus der US 5 469 810 A bekannte Aufzuchtvorrichtung, vergleiche insbesondere Figur 2B, besteht aus mehreren nach oben offenen Aufzuchttanks, die in einem Stock in mehreren Etagen übereinander angeordnet sind. Jeder Aufzuchttank weist vier nach oben offene Abteile zur separierten Hälterung von lebenden Fischen auf. Dabei sind die Trennwände zwischen den einzelnen Abteilen wasserdurchlässig, sodass sich das Aufzuchtwasser lateral zwischen den einzelnen Abteilen austauschen kann. Die Rückleitung des Aufzuchtwassers in den Vorratstank erfolgt über eine Kaskadierung aus einfachen Rohrabschnitten über alle Aufzuchttanks. In der Zuleitung ist eine Pumpe zur Förderung des Aufzuchtwassers aus dem unteren Vorratstank in den obersten Aufzuchttank angeordnet. Die Pumpe muss kontinuierlich laufen, um einen Wasseraustausch zu gewährleisten. Das Aufzuchtwasser wird kontinuierlich zu- und abgeführt. Dadurch ändert sich der Wasserstand in den Aufzuchttanks bzw. Abteilen nicht. Vorhandene Filter können schnell verstopfen. In der Rückleitung sind keine elektrisch betriebenen Mittel zur Rückförderung vorgesehen, diese erfolgt ausschließlich durch die Schwerkraft. Eine Steuerungsvorrichtung ist lediglich für den Vorratstank vorgesehen, wobei dieser über die Tankleitung ausschließlich mit dem Vorratstank verbunden ist.

Aus der JP 2009-044 979 A ist eine Aufzuchtvorrichtung bekannt, bei der mehrere Abteile zur getrennten Hälterung in einem Gestell über- und nebeneinander angeordnet sind. Dabei kann vorgesehen sein, dass jedes Abteil über eine separate Zuleitung zur Zufuhr von Frischwasser und eine davon getrennte, separate Ableitung zur Abfuhr von Schmutzwasser verfügt. Zuleitung und Rückleitung erfolgen aus/in unterschiedliche Reservoire, da drei verschiedene Wassersorten zugeführt, aber nur eine Sorte Schmutzwasser abgeführt wird.

Der der Erfindung sowohl bezüglich des Verfahrens als auch bezüglich der Vorrichtung zur Durchführung des Verfahrens nächstliegende Stand der Technik wird in der DE 76 11 949 U offenbart. Die hieraus bekannte Aufzuchtvorrichtung besteht aus mehreren nach oben offenen Aufzuchttanks, die in einem Stock in mehreren Etagen übereinander angeordnet sind. Jeder Aufzuchttank ist nicht unterteilt. Unter-halb der Aufzuchttanks ist ein Vorratstank angeordnet, der als Reservoir für frisches Aufzuchtwasser dient. Von diesem Vorratstank führt eine einzige Zuleitung für das Aufzuchtwasser ausschließlich in die obersten Aufzuchttanks. Die Zuleitung endet jeweils mit nur einer einzelnen Rohröffnung oberhalb des Wasserspiegels in den obersten Aufzuchttanks, sodass die Wasseroberfläche durch das einfließende Aufzuchtwasser verwirbelt wird. Die Rückleitung des Aufzuchtwassers in den Vorratstank erfolgt über eine Kaskadierung über jeweils übereinander liegende Aufzuchttanks. Nur die untersten Aufzuchttanks sind mit dem Vorratstank verbunden.

Bei dem bekannten Verfahren zum Wasseraustausch wird das Aufzuchtwasser aus dem Vorratstank nur dem obersten Aufzuchttank bei kontinuierlichem dauerhaftem Pumpbetrieb zugeführt. Das Wasser durchläuft dann alle darunter liegenden Aufzuchttanks und gelangt erst von dem untersten Aufzuchttank wieder in den Vorratstank. Durch die Anordnung von Zuleitung und Rückleitung ergibt sich eine unvorteilhafte Reihenschaltung der Aufzuchttanks mit abnehmender Qualität des Aufzuchtwassers. In der Zuleitung ist eine Pumpe zur Förderung des Aufzuchtwassers aus dem unteren Vorratstank in den obersten Aufzuchttank angeordnet. Die Pumpe muss kontinuierlich laufen, um einen Wasseraustausch zu gewährleisten. Dieser erfolgt nach dem Prinzip der kommunizierenden Wassersäulen, jeweils zwischen zwei übereinander liegenden Aufzuchttanks. Dabei wird jeweils ein Saugrohr eingesetzt, das mit einem verschlossenen Behälter verbunden ist. Im Behälter befindet sich ein Überlaufrohr, das oberhalb des Wasserspiegels des darunter liegenden Aufzuchttanks endet. Der verschlossene Behälter weist weiterhin ein Belüftungsrohr auf. Steigt nun der Wasserspiegel beim Zuleiten von Aufzuchtwasser auch im Behälter an, läuft es zunächst über das Überlaufrohr ab. Da die ablaufende Wassermenge aber nicht ausreicht, steigt der Wasserspiegel weiter an, bis das Belüftungsrohr verschlossen wird (maximaler Wasserstand). Nun entsteht ein Überdruck im Behälter, der zu vermehrtem Rücklauf führt, bis das Belüftungsrohr wieder offen ist (minimaler Wasserstand). Das Aufzuchtwasser wird somit periodisch abgeführt, wobei die Pumpe aber immer in Betrieb ist.

### Aufgabenstellung

Ausgehend von dem zuletzt genannten Stand der Technik ist die Aufgabe für die vorliegende Erfindung darin zu sehen, ein Verfahren und eine Vorrichtung zur Durchführung des Verfahrens anzugeben, bei denen ein guter Wasseraustausch bei gleichbleibend hoher Wasserqualität in allen Aufzuchttanks bzw. Abteilen sicher gewährleistet ist. Dabei sollen ein deutlich reduzierter Energie- und Reinigungsaufwand sowie ein minimierter konstruktiver Aufwand mit einer optimalen Handhabung erreicht werden.

Die erfindungsgemäßen Merkmale zur Lösung der Aufgabe sind dem unabhängigen Verfahrensanspruch 1 und dem unabhängigen Vorrichtungsanspruch 5 zu entnehmen. Vorteilhafte Weiterbildungen der Erfindung werden jeweils in den Unteransprüchen aufgezeigt und im Folgenden im Zusammenhang mit der Erfindung näher erläutert.

Das beanspruchte Verfahren ist erfindungsgemäß dadurch gekennzeichnet, dass Wasserverluste im Vorratstank durch Zuführen von frischem Aufzuchtwasser gesteuert ausgeglichen werden und dass das Aufzuchtwasser separat in jeden einzelnen Aufzuchttank aus dem Vorratstank zugeleitet und separat aus jedem einzelnen Aufzuchttank direkt in den Vorratstank rückgeleitet wird, wobei zwischen Zuleiten und Rückführen des Aufzuchtwassers zu und von jedem Aufzuchttank über jeweils ein und dieselbe Rohrleitung periodisch fortlaufend abgewechselt und während des Rückleitens die Pumpe nicht betrieben wird.

Durch das abwechselnde Zuleiten und Rückführen des Aufzuchtwassers pendelt der Wasserstand - nach Art des Tiedenhubs - in allen Aufzuchttanks periodisch zwischen einer oberen und einer unteren Marke hin und her, wodurch ein guter und gleichmäßiger Wasseraustausch in allen Aufzuchttanks bzw. Abteilen erreicht wird. Dabei kann entweder der maximale Wasserstand nach Erreichen sofort wieder verlassen und die Rückleitung eingeleitet werden. Der maximale Wasserstand kann aber auch eine Weile gehalten werden, bevor die Rückleitung einsetzt und der Wasserstand in Richtung auf den minimalen Wasserstand wieder absinkt. Das Halten des maximalen Wasserstands kann vorteilhaft und bevorzugt entweder direkt durch die Dauer des Pumpbetriebs der Pumpe eingestellt werden, wobei im abgestellten Zustand der Pumpe dann ein Rückfluss von Aufzuchtwasser zunächst (während des Haltens des maximalen Wasserstands) verhindert werden muss, oder durch Rückleiten des Aufzuchtwassers über einen Überlauf in Höhe des maximalen Wasserstandes in den Vorratstank während des Pumpbetriebes der Pumpe erreicht werden. Die Pumpe fördert dann noch eine zeitlang weiter. Das sich oberhalb des maximalen Wasserstands ansammelnde Aufzuchtwasser läuft durch den Überlauf wieder in den Vorratstank zurück. Durch dieses Vorgehen wird insgesamt der Wasseraustausch noch vergrößert (bis hin zu einem vollständigen Wasseraustausch in den einzelnen Aufzuchttanks bzw. Abteilen), sodass hier eine noch bessere Wasserqualität erreicht werden kann. Auch der minimale Wasserstand kann eine Weile gehalten werden. Dieser kann bevorzugt und vorteilhaft entweder durch die Dauer der Pumppause der Pumpe (also der Zeit bis zum Wiederanfahren der Pumpe) oder durch den Ort der Absaugung des Aufzuchtwassers aus dem Aufzuchttank eingestellt werden. Dabei wird der Ort des Absaugens durch das obere Ende der kommunizierenden Wassersäule und damit durch die Lage des oberen Endes der rückleitenden Rohrleitung bestimmt. Ein Absinken des minimalen Wasserstands unter diese Höhe ist nicht möglich, auch wenn die Pumppause fortdauert. Die Wassersäule reißt ab. Dadurch ist ein Trockenfallen der Aufzuchttanks verhindert. Bevorzugt und vorteilhaft kann das Zuleiten und Rückleiten des Aufzuchtwassers - und damit die Dauer des maximalen und des minimalen Wasserstands in den Aufzuchttanks - auch automatisch gesteuert werden. Dadurch ist ein autarker Betrieb, auch zu Zeiten ohne personelle Überwachung, sicher gewährleistet.

Erfindungsgemäß erfolgt das Zuleiten und Rückleiten des Aufzuchtwassers zu und von jedem Aufzuchttank über jeweils ein und dieselbe Rohrleitung. Dadurch ist auch konstruktiv ein minimaler Aufwand gesichert. Da dabei die Pumpe beim Zuleiten anderes Aufzuchtwasser aus dem Vorratstank wieder in die Aufzuchttanks pumpt als beim Rückleiten aus den Aufzuchttanks in den Vorratstank geflossen ist, wird das Aufzuchtwasser nicht nur hin- und hergeschaukelt, sondern es findet ein guter Teilwasseraustausch in allen Aufzuchttanks statt. Durch ein bevorzugtes und vorteilhaftes Zuleiten des Aufzuchtwassers unterhalb des Wasserspiegels ist ein störungsfreier Einblick in das Aufzuchtwasser in den nach oben offenen Aufzuchttanks bzw. Abteilen gewährleistet.

Die beanspruchte Aufzuchtvorrichtung ist erfindungsgemäß dadurch gekennzeichnet, dass die Aufzuchttanks jeweils mehrere ebenfalls nach oben offene, wasserdurchlässigen Abteile zur separaten Hälterung der Wassertiere aufweisen, dass eine Steuerungsvorrichtung sowie eine Zulaufleitung für frisches Aufzuchtwasser in den Vorratstank vorgesehen sind und dass zwischen der Pumpe und jedem Aufzuchttank eine Rohrleitung angeordnet ist, die mit keinem weiteren Aufzuchttank verbunden ist, und dass die Steuerungsvorrichtung mit der Pumpe verbunden und so ausgebildet ist, dass die Pumpe periodisch intermittierend zwischen Pumpbetrieb und Pumppausen betreibbar ist, wobei jede Rohrleitung im Pumpbetrieb als Zuleitung und in den Pumppausen als Rückleitung genutzt ist, die Rohröffnungen unmittelbar unterhalb eines minimalen Wasserstandes angeordnet und Wandungen der Abteile höher als ein maximaler Wasserstand in den Aufzuchttanks sind.

Bei der erfindungsgemäßen Aufzuchtvorrichtung ist jedem Aufzuchttank eine eigene separate Rohrleitung zugeordnet, die mit keinem anderen Aufzuchttank verbunden ist. Daher kann in der Aufzuchtvorrichtung kein vertikaler Wasseraustausch zwischen den einzelnen Aufzuchttanks stattfinden. Die Wasserqualität ist - in Abhängigkeit vom zugeführten gefilterten, belüfteten und temperierten Aufzuchtwasser - in jedem Aufzuchttank gleich gut und hoch. Qualitätsminderungen werden nicht von Aufzuchttank zu Aufzuchttank weitergegeben. Weiterhin ist die erfindungsgemäße Aufzuchtvorrichtung durch Mittel zur Herbeiführung eines periodisch intermittierenden Pumpbetriebs gekennzeichnet, der zu einem stetig abwechselnden Ansteigen und Absenken des Wasserspiegels in den Aufzuchttanks bzw. einzelnen Abteilen und damit zu einem effizienten Teilwasserwechsel führt. Dazu erfolgen die Zuleitung und die Rückleitung des Aufzuchtwassers zeitlich nacheinander und nicht - wie aus dem Stand der Technik durchgängig bekannt - zeitlich parallel. Ein konstanter Wasserpegel mit einer starken Querströmung ist vermieden. Somit ist auch der laterale Wasseraustausch zwischen den einzelnen Abteilen in einem Aufzuchttank weitgehend vermieden. Verschmutzungen, die in einem Abteil auftreten, werden nicht in die benachbarten Abteile übertragen. Dadurch, dass die Wandungen der Abteile höher als der maximale Wasserstand in den Aufzuchttanks ausgebildet sind, wird vermieden, dass aufsteigendes Aufzuchtwasser von oben aus den Aufzuchttanks in die nach oben offenen Abteile eindringt.

Während des Pumpbetriebs steigt der Wasserspiegel in den einzelnen Abteilen gleichmäßig an. Dazu werden die Rohrleitungen als Zuleitungen genutzt, die das Aufzuchtwasser vom Vorratstank zeitlich parallel in alle Aufzuchttanks leiten. Während der Pumppausen sinkt der Wasserspiegel in allen Abteilen dann wieder ab. Dazu werden die Rohrleitungen als Rückleitungen genutzt. Durch diesen An- und Abstieg findet ein zuverlässiger Wasseraustausch in den Aufzuchttanks bzw. in den einzelnen Abteilen statt - ohne einen vertikalen Wasseraustausch zwischen den einzelnen Aufzuchttanks und ohne wesentlichen lateralen Wasseraustausch in einem einzelnen Aufzuchttank. Die Höhe des Anstiegs ist in Abhängigkeit von den konstanten Größen (Pumpenleistung, Rohrquerschnitt und Grundfläche der Aufzuchttanks) entweder abhängig von der Dauer des Pumpbetriebs, die durch die Steuervorrichtung festgelegt ist, oder durch Vorsehen von Überlaufleitungen aus den Aufzuchttanks (siehe unten). Die Höhe des Absinkens ist durch die Pumppausen bzw. durch die Höhenlage der Rohröffnung der Rückleitung in den Aufzuchttanks festgelegt.

Durch die wiederholten Unterbrechungen des Pumpbetriebes durch die Pumppausen verringert sich die Betriebszeit der Pumpe deutlich. Sie läuft nicht mehr - wie aus dem Stand der Technik durchgängig bekannt - kontinuierlich. Es wird entsprechend Antriebsenergie eingespart. Die Rückleitung des Aufzuchtwassers aus den Aufzuchttanks in den Pumppausen erfolgt ohne weitere elektrische Betriebsmittel, sodass hier kein Energieeinsatz erforderlich ist. Die Rückleitung erfolgt entsprechend unterhalb des Wasserspiegels in den Aufzuchttanks. Es wirken nur die Schwerkraft und der Rücksog des bevorrateten Aufzuchtwassers im Vorratstank (nach Art der kommunizierenden Röhren zwischen Aufzuchttank und Vorratstank).

Bevorzugt und vorteilhaft kann eine Pumpe in der Aufzuchtvorrichtung eingesetzt werden, die eine reibungsarm entgegen der Förderrichtung betreibbare Fördereinrichtung aufweist. Dann kann die Rückleitung des Aufzuchtwassers in den Vorratstank über die Pumpe in der Pumppause erfolgen. Somit fließt das rückströmende Aufzuchtwasser direkt über die Pumpe und somit gleichzeitig auch einen reinigenden Effekt auf die Rohrleitung und die Pumpe. Weiterhin können bevorzugt und vorteilhaft hinter der Pumpe in Richtung der Aufzuchttanks ein gemeinsamer Rohrleitungsabschnitt und ein Verteiler zu den Rohrleitungen der Aufzuchttanks vorgesehen sein. Dadurch kann die Pumpe in einfacher Weise mit den verschiedenen Rohrleitungen für die Aufzuchttanks verbunden sein. In diesem Fall kann bevorzugt und vorteilhaft in dem gemeinsamen Rohrleitungsabschnitt ein Zweiwegeventil mit einer Durchlass- und einer Auslassposition angeordnet sein, das über die Steuerungseinrichtung im Pumpbetrieb auf die Durchlassposition und in den Pumppausen auf die Auslassposition geschaltet wird, wobei die Auslassposition mit dem Vorratstank verbunden ist. Somit fließt das rückströmende Aufzuchtwasser nicht über die Pumpe, die daher auch eine Bauart haben kann, die keine Rückwärtsbewegung zulässt. Vielmehr strömt das Aufzuchtwasser vor der Pumpe über das Zweiwegeventil in Auslassposition direkt in den Vorratstank oder alternativ in einen weiteren Behälter zur Entsorgung des Aufzuchtwassers. Entsorgtes Aufzuchtwasser wird kontinuierlich durch eine Zufuhr von frischem Aufzuchtwasser in den Vorratstank kompensiert. Bei einem erneuten Anfahren der Pumpe wird dieses Zweiwegeventil dann vor der Steuerungsvorrichtung wieder in die Durchlassposition geschaltet. Direkt in den Vorratstank rückgeleitetes Aufzuchtwasser kann bevorzugt und vorteilhaft über eine Filteranlage zwischen der Auslassposition des Zweigwegeventils und dem Vorratstank geleitet und somit gereinigt werden. Dabei ist aber insgesamt der Reinigungsaufwand bei der Aufzuchtvorrichtung nach der Erfindung äußerst gering. Das Aufzuchtwasser vollzieht in den Rohrleitungen eine Pendelbewegung, die alternierend ggfs. zu einer Ablagerung von Verschmutzungen an Einbauten und Kanten in der einen Strömungsrichtung, aber dann auch wieder zu einer Säuberung in der anderen Strömungsrichtung führt. Die Ablagerungen können sich also nicht festsetzen. Die alternierend sowohl als Zuleitungen als auch als Rückleitungen arbeitenden Rohrleitungen bleiben dadurch frei von Ablagerungen. Gleiches gilt für die Pumpe. In der einen Strömungsrichtung am Pumpenfilter auftretende Ablagerungen werden nach der Umkehr der Strömungsrichtung wieder weggespült. Dadurch benötigt die Pumpe keine Säuberungswartung. Ein Filteraustausch ist nicht erforderlich.

Durch die Anordnung der Rohröffnungen der Rohrleitungen unmittelbar unterhalb des minimalen Wasserstandes wird das Aufzuchtwasser immer unterhalb des Wasserspiegels in den Aufzuchttank eingeleitet. Durch die Lage der Rohröffnung im Aufzuchtwasser können somit keine Verwirbelungen der Wasseroberfläche bei der Wasserzuleitung entstehen - im Gegensatz zu Einrieselungen durch eine Vielzahl von Rohröffnungen oberhalb der Wasseroberfläche. Das Aufzuchtwasser in den einzelnen Abteilen ist immer gut einsehbar, zumal keine Berieselungs- oder sonstigen Rohranlagen die Einsicht versperren. Der Wasserrücklauf ist immer zuverlässig gesichert. Der minimale Wasserstand liegt dabei so weit über dem Boden des Aufzuchttanks, dass bei Erreichen des minimalen Wasserstandes trotzdem ein Überleben der Aufzuchttiere sicher gewährleistet ist. Ein Trockenfallen der Aufzuchttanks ist sicher vermieden.

Über die Steuerungsvorrichtung wird der Pumpbetrieb periodisch intermittierend ausgeführt. Dabei können der Pumpbetrieb und die Pumppausen unterschiedlich oder gleich lang sein und beliebig variieren, solange dies sinnvoll und an den jeweiligen Aufzuchtfall angepasst ist. Dabei kann in den Pumpphasen genauso viel Aufzuchtwasser zugeführt wie in den Pumppausen rückgeführt wird, sodass sich im Mittel die Wassermenge in den Aufzuchttanks nicht verändert. Bei einer weiteren Zuleitung von Aufzuchtwasser in die Aufzuchttanks nach Erreichen des maximalen Wasserstands wird überschüssiges Aufzuchtwasser über die Überläufe rückgeführt, und es findet ein vollständiger Wasseraustausch statt. Die Betriebsphasen der Pumpe können beispielsweise genauso lang sein wie die Ruhephasen (50% Energieeinsparung gegenüber kontinuierlichem Betrieb). Die Menge des zulaufenden Aufzuchtwassers ist abhängig von den Rohrleitungsquerschnitten und der Pumpleistung und kann über Regelhähne dosiert werden. Grundsätzlich kann die Steuerungseinrichtung manuell betrieben werden, wobei dann ständig Bedienpersonal anwesend sein muss. Bevorzugt und vorteilhaft weist die Steuerungsvorrichtung ein Zeitschaltrelais auf, mit dem mehrere Pumpen gesteuert werden können. Ein reibungsloser automatisierter Tag- und Nachtbetrieb der Aufzuchtvorrichtung ohne die ständig,zwingende Anwesenheit von Personal ist damit einfach realisierbar.

Die Pumpenleistung kann so ausgelegt sein, dass mit einer Pumpe alle Aufzuchttanks über die Rohrleitungen mit Aufzuchtwasser versorgt werden können. Vorteilhaft und bevorzugt kann aber auch vorgesehen sein, dass die zumindest eine Pumpe einer Anzahl n von Aufzuchttanks zugeordnet ist und dass für je weitere n Aufzuchttanks eine weitere Pumpe vorgesehen ist, wobei die Pumpen in einem gemeinsamen oder mehreren verschiedenen Vorratstanks angeordnet sind. Dadurch kann auch eine relativ große Aufzuchtvorrichtung nach der Erfindung realisiert werden. Die Aufzuchttanks sind mehrstöckig übereinander angeordnet, der Vorratstank liegt darunter, damit das Aufzuchtwasser ohne elektrischen Antrieb in den Vorratstank zurückfließen kann. Um eine zu große Stockhöhe bei einer größeren Anzahl von Aufzuchttanks zu vermeiden, sind bevorzugt und vorteilhaft die n Aufzuchttanks in zumindest zwei nebeneinander liegenden Stöcken angeordnet, wobei die Steuerungsvorrichtung so ausgebildet ist, dass die n Pumpen alternierend betrieben werden. Dadurch kann sichergestellt werden, dass die Vorratstanks nicht leerlaufen.

Bei der Erläuterung des Verfahrens nach der Erfindung wurde bereits ausgeführt, dass der maximale Wasserstand in den Aufzuchttanks entweder durch die Dauer des Pumpbetriebs oder durch eine Rückleitung von überschüssigem Zuchtwasser in den Vorratstank einstellbar ist. Für die zweite Alternative ist es daher bei der Vorrichtung zur Durchführung des Verfahrens vorteilhaft, wenn jeder Aufzuchttank oberhalb eines maximalen Wasserstandes eine Überlaufleitung aufweist, die in den Vorratstank geführt ist. Ein Überlaufen der Aufzuchttanks ist damit sicher verhindert. Der maximale Wasserstand kann damit auch bei laufenden Pumpen eingehalten werden, der Wasseraustausch kann vergrößert werden.

Ein besonderer Vorteil der Aufzuchtvorrichtung nach der Erfindung liegt in diesem guten Wasseraustausch in den einzelnen Aufzuchttanks ohne einen Wasseraustausch zwischen ihnen (kein vertikaler Wasseraustausch). In den Aufzuchttanks sind die einzelnen Abteile zur separierten Hälterung von beispielsweise Hummern, die kannibalistisch leben, angeordnet. Der Wasserstand steigt und fällt in den einzelnen Abteilen gleichermaßen wie im umgebenden Aufzuchttank. Kann dabei das Aufzuchtwasser auch seitlich in die Abteile einströmen, kann ein lateraler Wasseraustausch zwischen den einzelnen Abteilen auftreten. Deshalb ist es bevorzugt und vorteilhaft, wenn jedes wasserdurchlässige Abteil nur einen wasserdurchlässigen Boden, aber wasserundurchlässige Wandungen aufweist. Dadurch kann das Aufzuchtwasser nur von unten in die Abteile hinein- und aus diesen wieder herausgelangen, sodass ein lateraler Wasseraustausch zwischen den einzelnen Abteilen in einem Aufzuchttank weitgehend vermieden ist. Der Wasserstand in den einzelnen Abteilen steigt und sinkt gleichmäßig alternierend. Dabei ist der Wasserspiegel völlig ruhig und gewährt eine gute Einsicht in die Abteile.

Eine weitere Maßnahme zur Verbesserung der Aufzuchtvorrichtung nach der Erfindung besteht bevorzugt und vorteilhaft darin, dass die Rohrleitungen über die seitlichen Wandungen der Aufzuchttanks hinübergeführt sind. Dadurch werden Durchdringungen der Wandungen mit möglichen Dichtheitsproblemen vermieden. Weitere Verbesserungen zur Automatisierbarkeit ergeben sich dadurch, dass der Vorratstank eine Überlaufleitung aufweist. Dadurch kann ein Überlaufen des Vorratstanks vermeiden werden. Der Vorratstank wird kontinuierlich mit frischem Aufzuchtwasser (gefiltert, belüftet, temperiert) versorgt. Weitere vorteilhafte Modifikationen und Erläuterungen zu den genannten Ausführungsformen der Aufzuchtvorrichtung nach der Erfindung sind den nachfolgend beschriebenen Ausführungsbeispielen zu entnehmen.

### Ausführungsbeispiele

Die Aufzuchtvorrichtung nach der Erfindung wird im Folgenden anhand der schematischen, nicht maßstäblichen Figuren zu Ausführungsbeispielen zum weiterführenden Verständnis erläutert. Im Einzelnen zeigt die
- Figur 1: den Aufbau der Aufzuchtvorrichtung in einem Ausführungsbeispiel,
- Figur 2A: den Ablauf des Verfahrens ohne Verweilzeiten,
- Figur 2B: den Ablauf des Verfahrens mit Verweilzeiten,
- Figur 3: ein Detail im Bereich der Rohrleitung,
- Figur 4A: ein erstes Detail im Bereich der Pumpe,
- Figur 4B: ein alternatives Detail Bereich der Pumpe,
- Figur 5: einen erweiterten Aufbau der Aufzuchtvorrichtung und
- Figur 6: ein Detail im Bereich der Aufzuchttanks.

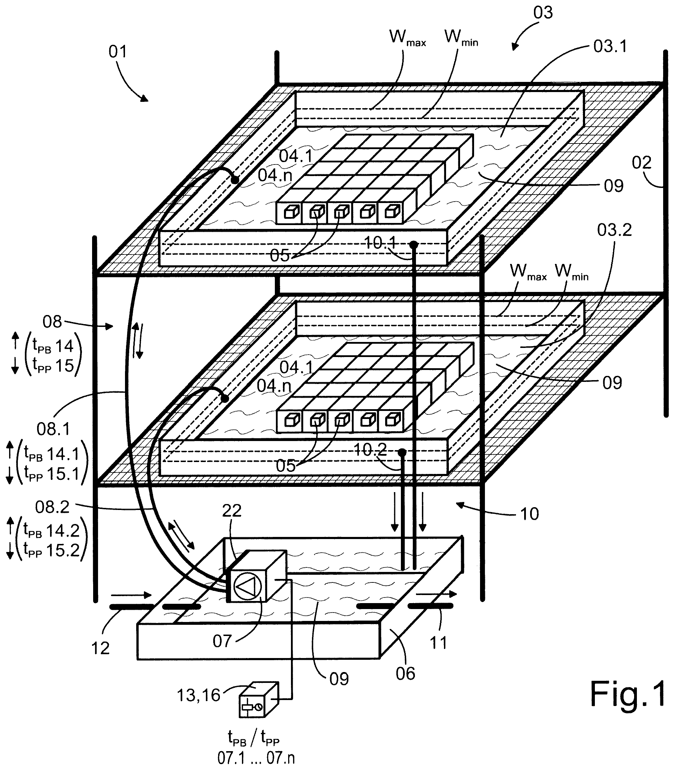

In der Figur 1 ist eine Aufzuchtvorrichtung 01 dargestellt, die insbesondere der separierten Aufzucht von Hummern dient. In einem Gestell 02 sind übereinander mehrere Aufzuchttanks 03.1, 03.2 - im gezeigten Ausführungsbeispiel zwei - angeordnet. Die Aufzuchttanks 03 sind nach oben offen und lassen eine gute Einsicht in ihr Inneres zu. Dort befinden sich wasserdurchlässige Abteile 04, in die die Hummer 05 (angedeutet durch Klötzchen) eingebracht werden können. Die Abteile 04 sind ebenfalls nach oben hin offen und ermöglichen die Beobachtung der Hummer 05. Unterhalb der Aufzuchttanks 03 ist ein Vorratstank 06 angeordnet. In dem Vorratstank 06 befindet sich eine Pumpe 07. Von dieser Pumpe 07 verläuft (über einen Rohrverteiler 22) zu jedem Aufzuchttank 03 eine separate Rohrleitung 08. Im gezeigten Ausführungsbeispiel verläuft zum Aufzuchttank 03.1. die Rohrleitung 08.1 und zum Aufzuchttank 03.2. die Rohrleitung 08.2. Jede Rohrleitung 08.1, 08.2 ist mit keinem weiteren Aufzuchttank 03.1, 03.2 verbunden, sodass kein Wasseraustausch zwischen den einzelnen Aufzuchttanks 03.1, 03.2 stattfinden kann. In den Aufzuchttanks 03 und in dem Vorratstank 06 befindet sich Aufzuchtwasser 09.

Weiterhin ist in der Figur 1 für jeden Aufzuchttank 03.1, 03.2 jeweils eine Überlaufleitung 10, im gezeigten Ausführungsbeispiel 10.1, 10.2, vorgesehen, über die Aufzuchtwasser 09 bei einem erreichten maximalen Wasserstand Wₘₐₓ in den Aufzuchttanks 03 in den Vorratstank 06 zurückläuft. Der Vorratstank 06 weist eine Ablaufleitung 11 auf, über die kontinuierlich verbrauchtes und überschüssiges Aufzuchtwasser 09 abfließt. Weiterhin verfügt der Vorratstank 06 über eine Zulaufleitung 12, über die frisches (aufbereitetes) Aufzuchtwasser 09 kontinuierlich dem Vorratstank 06 zufließt.

Die Pumpe 07 ist mit einer Steuerungseinrichtung 13 verbunden. Über diese Steuerungseinrichtung 13 wird mittels eines Zeitschaltrelais 16 die Pumpe 07 (und alle weiteren Pumpen 07.1...07.n) automatisch periodisch intermittierend zwischen einem Pumpbetrieb t_{PB} und Pumppausen t_{PP} betrieben. Während des Pumpbetriebs t_{PB} wird Aufzuchtwasser 09 den Aufzuchttanks 03.1, 03.2 zugeführt, sodass die Rohrleitungen 08.1, 08.2 in dieser Zeit als Zuleitungen 14.1, 14.2 ausgebildet sind. In den Pumppausen t_{PP} fließt das Aufzuchtwasser 09 über die Rohrleitungen 08.1, 08.2 zurück, sodass diese in dieser Zeit als Rückleitungen 15.1, 15.2 ausgebildet sind (vergleiche Pfeile in Figur 1). Die beiden begrenzenden Wasserstände Wₘₐₓ und Wₘᵢₙ in den Aufzuchttanks 03 sind angedeutet.

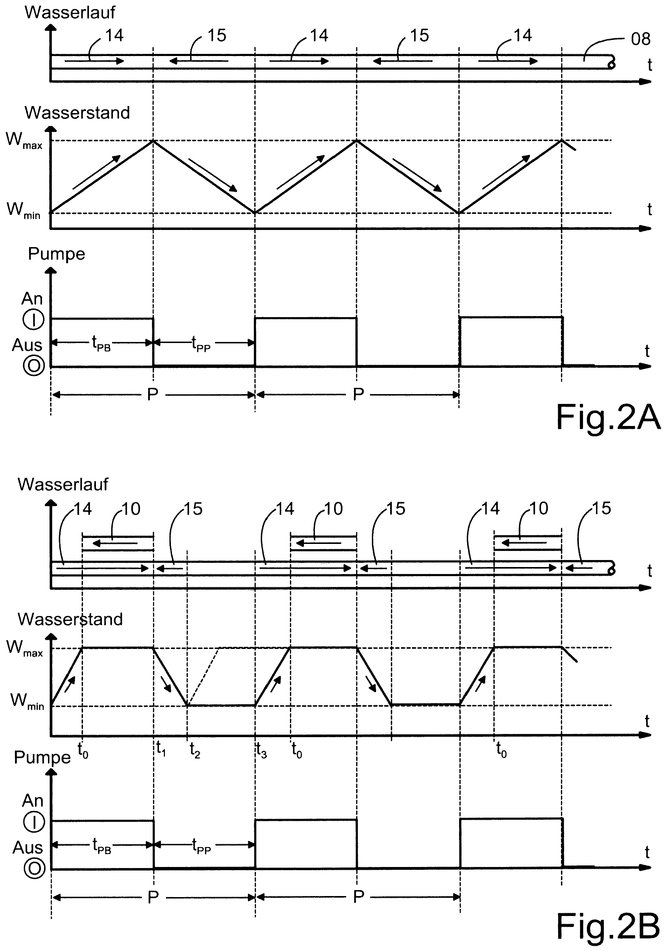

In der Figur 2A ist ein Zeitdiagramm (über der Zeit t) für den Verfahrensablauf näher dargestellt, bei dem der maximale Wasserstand Wₘₐₓ und der minimale Wasserstand Wₘᵢₙ ausschließlich über den Pumpbetrieb (und nicht über Überlauf und Rückleitung) bestimmt werden. Im untersten Diagramm in Figur 2A ist der Pumpbetrieb aufgezeigt. In den Intervallen "Pumpbetrieb" t_{PB} ist die Pumpe 07 angeschaltet (I), in den Intervallen "Pumppause" t_{PP} ist die Pumpe 07 ausgeschaltet (O). Die Zeitintervalle t_{PB}, t_{PP} treten mit einer Periode P (t_{PB} + tpp) periodisch abwechselnd auf. Dabei können die Zeitintervalle t_{PB}, t_{PP} unterschiedlich oder auch gleich lang sein. Die Periode P kann veränderlich oder auch konstant sein. Während des Pumpbetriebs t_{PB} steigt in den Aufzuchttanks 03 der Wasserstand kontinuierlich von einem minimalen Wasserstand Wₘᵢₙ auf einen maximalen Wasserstand Wₘₐₓ an, siehe mittleres Diagramm in der Figur 2. Während der Pumppausen t_{PP} sinkt der Wasserstand dann wieder vom maximalen Wasserstand Wₘₐₓ auf den minimalen Wasserstand Wₘᵢₙ. Dieser Vorgang wird periodisch wiederholt, der Wasserstand pendelt zwischen Wₘₐₓ und Wₘᵢₙ hin und her (in Figur 2A ohne Verweilzeiten im Gegensatz zu Figur 2B). Dabei wird ein effizienter Wasseraustausch in den Aufzuchttanks 03 bewirkt, insbesondere sind keine Wasserheizung und Wasserfilterung erforderlich, außerdem ist der intermittierende Pumpentrieb t_{PB} gegenüber einem kontinuierlichen Pumpbetrieb deutlich reduziert. Die Rohrleitungen 08 sind während des Pumpbetriebs t_{PB} als Zuleitungen 14 und während der Pumppausen t_{PP} als Rückleitungen 15 ausgebildet, siehe oberes Diagramm in der Figur 2 (Darstellung über der Zeit - nicht über dem Ort!).

In der Figur 2B ist ein anderes Zeitdiagramm für einen noch verbesserten Wasseraustausch in den Aufzuchttanks 3.0 durch Verweilzeiten auf dem maximalen Wasserstand Wₘₐₓ dargestellt. Der Pumpbetrieb t_{PB} ist verlängert, ab einem Zeitpunkt t₀ ist der maximale Wasserstand Wₘₐₓ erreicht, das Aufzuchtwasser 09 läuft dann sowohl über die Zuleitung 14 in den Aufzuchttank 03 hinein als auch gleichzeitig über die Überlaufleitung 10 aus diesen heraus. Zum Zeitpunkt t₁ wird die Pumpe 7.0 abgeschaltet. Bis zum Zeitpunkt t₂ läuft das Aufzuchtwasser 09 durch Rücksogwirkung über die Rückleitung 15 zurück in den Vorratstank 06. Bei Erreichen des minimalen Wasserstandes Wₘᵢₙ (erzielt durch die Länge der Pumppause t_{PP} und der Positionierung der Rohröffnung 17 der Rückleitung 15 im Aufzuchttank 03) zum Zeitpunkt t₂ kann entweder die Pumpe 07 wieder anlaufen (vergleiche Figur 2A, gestrichelt angedeutet)) oder noch eine Weile ausgeschaltet bleiben, bis sie zum Zeitpunkt t₃ wieder in Betrieb geht. Entsprechend sind die Zeiten t_{PB} und t_{PP} sowie die Periode P geändert und vom Zeitschaltrelais 16 angesteuert.

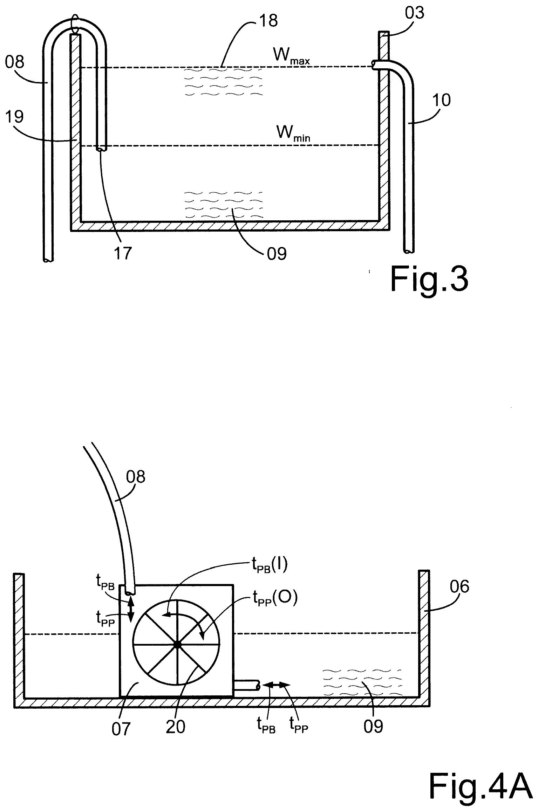

In der Figur 3 ist ein Detail im Bereich der Rohrleitung 08 aufgezeigt. Zu erkennen ist, dass die einzelne Rohröffnung 17 der Rohrleitung 08 unmittelbar unterhalb des minimalen Wasserstandes Wₘᵢₙ in das Aufzuchtwasser 09 im Aufzuchttank 03 hineinragt. Dadurch wird zum einen gewährleistet, dass beim Zuleiten (Rohrleitung 14) das zugeführte Aufzuchtwasser 09 den Wasserspiegel 18 nicht stört und den Durchblick zulässt. Zum anderen wird beim Rückleiten (Rohrleitung 15) gewährleistet, dass das Aufzuchtwasser 09 nicht unter den minimalen Wasserstand Wₘᵢₙ sinken kann, sodass die Aufzuchttanks 03 nicht trocken fallen. Weiterhin ist zu erkennen, dass die Rohrleitung 08 über eine Wandung 19 des Aufzuchttanks 03 herübergeführt ist. Zum einen werden dadurch Durchdringungen der Wandung 19 und entsprechende Dichtprobleme vermieden, zum anderen ist gewährleistet, dass die Rückleitung von Aufzuchtwasser 09 durch Rücksaugen in den Vorratstank 06 nach Art von kommunizierenden Röhren erfolgt. Der maximale Wasserstand Wₘₐₓ wird durch den Pumpbetrieb und durch die Höhe der Überlaufleitung 10 festgelegt.

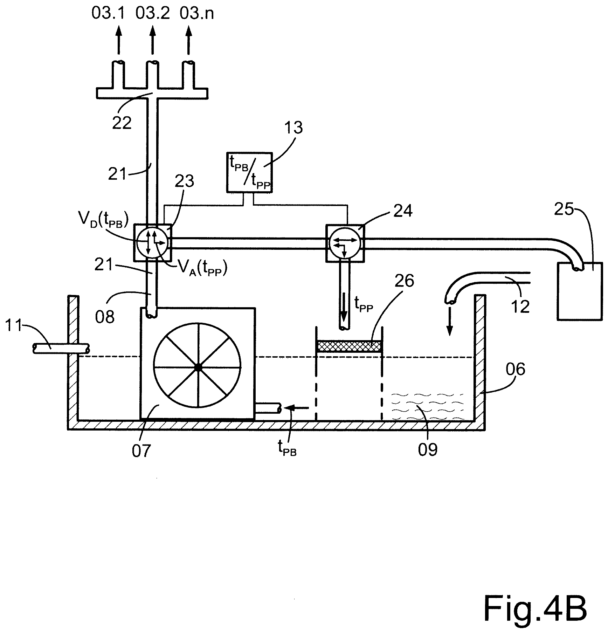

In der Figur 4A ist eine Pumpe 07 aufzeigt, deren Fördereinrichtung 20 so reibungsarm aufgebaut ist, dass sie sich in beiden Richtungen drehen kann (Doppelpfeil). Dann kann das Aufzuchtwasser 09 in beiden Richtungen über die Pumpe 07 fließen (Doppelpfeile), also insbesondere auch bei der Rückleitung. Dabei ist die Pumpe 07 aber ausgeschaltet, es herrscht Pumppause tpp. Die Figur 4B zeigt eine Alternative, bei der sich hinter der Pumpe 07 ein gemeinsamer Rohrleitungsabschnitt 21 befindet. An diesen schließt sich ein Rohrverteiler 22 zu den einzelnen Aufzuchttanks 03 an. Im gemeinsamen Rohrleitungsabschnitt 21 ist ein Zweiwegeventil 23 angeordnet, das im Pumpbetrieb t_{PB} in einer Durchlassposition V_{D} steht und das Aufzuchtwasser 09 in die Aufzuchttanks 03 durchlässt. In den Pumppausen t_{PP} steht das Zweiwegeventil 23 in einer Auslassposition V_{A}. Das rückströmende Aufzuchtwasser 09 strömt direkt - d.h. nicht über die Pumpe 07 - in den Vorratstank 06 zurück. Im Ausführungsbeispiel ist ein zweites Zweiwegeventil 24 vorgesehen, über das das rückströmende Aufzuchtwasser 09 auch alternativ zu einem weiteren Behälter 25 geleitet und entsorgt werden kann und nicht in den Vorratstank 06 zurückfließt. Entsprechend wird über die Zulaufleitung 12 frisches Aufzuchtwasser 09 nachgefördert. Beide Zweiwegeventile 23, 24 werden von der Steuereinrichtung 13 angesteuert. Weiterhin ist in der Figur 4B eine Filteranlage 26 zwischen der Auslassposition V_{A} des ersten Zweiwegeventils 23 und dem Vorratstank 06 zur Reinigung des rückgeleiteten Aufzuchtwassers 09 dargestellt. Durch weitere vorzusehende Ventile ist hier aber auch eine schaltbare Umgehung möglich, um durch die Filterung keine zu großen Zeitverzögerungen im rücklaufenden Aufzuchtwasser 09 hervorzurufen.

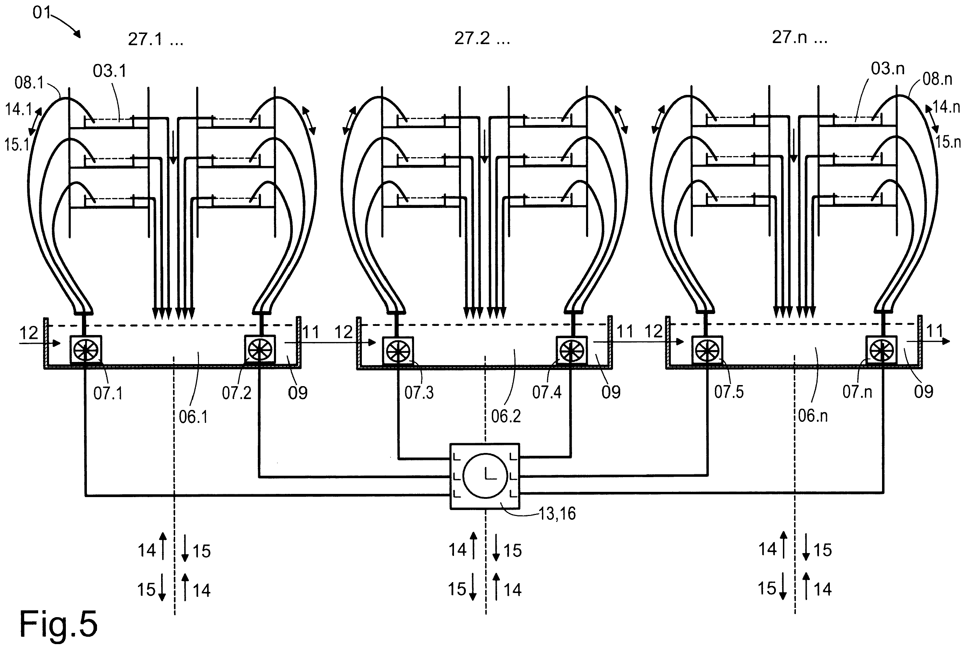

In der Figur 5 ist eine Schematisierung der Aufzuchtvorrichtung 01 nach der Erfindung für einen industriellen Maßstab dargestellt. Es sind 27.n Stöcke mit 03.n Aufzuchttanks vorgesehen, jeder Stock 27.n. hat drei Etagen mit jeweils zwei Aufzuchttanks 03.n. Jedem Stock 27.n. ist ein Vorratsbecken 06.n mit jeweils zwei Pumpen 07.n. zugeordnet. Alle Vorratstanks 06.1..06.n sind über die Zulaufleitungen 12 und die Ablaufleitungen 11 miteinander verbunden, das Aufzuchtwasser 09 durchströmt alle Vorratstanks 06.1..06.n..Jede Pumpe 07.n. versorgt jeweils die übereinander angeordneten Aufzuchttanks 3.n in einem Stock 27.n und somit die Hälfte der Aufzuchttanks 03.n. in einem Stock 27.n. Alle Pumpen 07.n sind mit der Steuerungseinrichtung 13 bzw. mit dem Zeitschaltrelais 16 verbunden. Dieses steuert, welche Pumpe 07.n. gerade läuft und wie lange. Dabei werden die Pumpen 07.n. in jedem Vorratstank 06.n. immer alternierend betrieben. Läuft die eine Pumpe 07.n und bedient die Zuleitung 14.n, steht die andere Pumpe 07.n still und das Aufzuchtwasser 09 wird über die Rückleitung 15.n zurückgesogen und umgekehrt. Beispielsweise werden über das Zeitschaltrelais 16 zunächst die Pumpen 07.1, 07.3 und 07.5 angesteuert (ggfs. etwas zeitversetzt). Nach deren Abschalten werden dann die Pumpen 07.2, 07.4 und 07.n angesteuert (ggfs. etwas zeitversetzt). Das gezeigte Schema ist auf eine beliebige Anzahl n von Pumpen 07.n, Stöcken 27.n mit Aufzuchttanks 03.n und Vorratstanks 06.n erweiterbar.

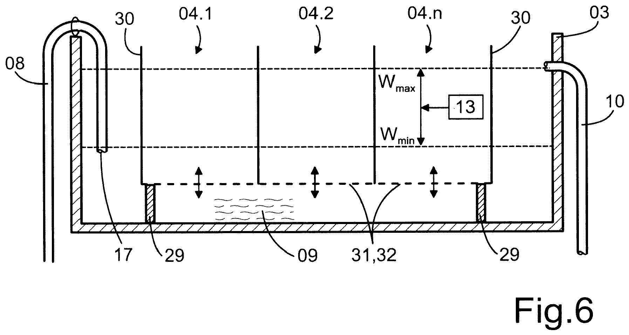

Die Figur 6 zeigt ein Detail im Bereich der Abteile 04 im Aufzuchttank 03. Gezeigt sind drei Abteile 04.1, 04.2, 04.3, die auf kleinen Füßen 29 aufgeständert sind, um das Eindringen von Aufzuchtwasser 09 von unten zu ermöglichen. Die seitlichen Wandungen 30 der Abteile 04.1, 04.2, 04.3 sind wasserundurchlässig und höher als der maximale Wasserstand Wₘₐₓ. Die Böden 31 der Abteile 04.1, 04.2, 04.3 sind wasserdurchlässig und als Siebe 32 ausgebildet. Damit erfolgt der Wasseraustausch durch die Änderung des Wasserstands zwischen Wₘᵢₙ und Wₘₐₓ nur durch die Böden 31 der Abteile 04.1, 04.2, 04.3, wodurch ein lateraler Wasseraustausch zwischen den einzelnen Abteilen 04.1, 04.2, 04.3 verhindert ist. Je nach aufzuziehender Spezies kann dann der minimale Wasserstand Wₘᵢₙ in Relation zur Höhe der Böden 31 in den einzelnen Abteilen 04 durch die Höhe der Füße 29, das Eintauchen der Rohrleitung 08 und/oder die Länge des Pausenbetriebs t_{PP} gewählt werden.

Zusammen mit dem Verfahren zur Aufzucht von Wassertieren wird damit mit der vorgestellten Erfindung eine Aufzuchtvorrichtung insbesondere für Hummer zur Verfügung gestellt, die einerseits optimal für deren Aufzucht konzipiert ist. Andererseits wird aber auch äußerst sparsam und nachhaltig mit den eingesetzten Ressourcen Wasser und Energie umgegangen, sodass ein zeitgemäßer und richtungweisender Charakter für die beanspruchte Aufzuchtvorrichtung erreicht werden konnte.

### Bezugszeichenliste

- 01: Aufzuchtvorrichtung
- 02: Gestell
- 03: Aufzuchttank
- 04: Abteil
- 05: Hummer
- 06: Vorratstank
- 07: Pumpe
- 08: Rohrleitung
- 09: Aufzuchtwasser
- 10: Überlaufleitung von 03
- 11: Ablaufleitung von 06
- 12: Zulaufleitung für 06
- 13: Steuerungseinrichtung
- 14: Zuleitung
- 15: Rückleitung
- 16: Zeitschaltrelais
- 17: Rohröffnung
- 18: Wasserspiegel
- 19: Wandung von 03
- 20: Fördereinrichtung von 07
- 21: Rohrleitungsabschnitt
- 22: Rohrverteiler
- 23: erstes Zweiwegeventil
- 24: zweites Zweiwegeventil
- 25: weiterer Behälter
- 26: Filteranlage
- 27: Stock für mehrere 03
- 28: weiteres Ventil
- 29: Fuß
- 30: Wandung von 04
- 31: Boden von 04
- 32: Sieb als 31

- I: Pumpe 07 eingeschaltet
- O: Pumpe 07 ausgeschaltet
- P: Periode (t_{PB} + t_{PP})
- t: Zeit
- t_{PB}: Pumpbetrieb (Zeitdauer)
- t_{PP}: Pumppause (Zeitdauer)
- V_{D}: Durchlassposition von 23
- V_{A}: Auslassposition von 23
- Wₘₐₓ: maximaler Wasserstand in 03, 04
- Wₘᵢₙ: minimaler Wasserstand in 03, 04
- 1, 2,.., n: Anzahl

## Patentansprüche

1. Verfahren zur Erzielung eines Wasseraustauschs in mehreren übereinander angeordneten Aufzuchttanks (03) zur Hälterung von Wassertieren mit Zuleiten von Aufzuchtwasser (09) bis zu einem maximalen Wasserstand (Wₘₐₓ) aus einem unterhalb der Aufzuchttanks angeordneten Vorratstank (06) zur Bevorratung von Aufzuchtwasser über eine Pumpe (07) in zumindest einen der Aufzuchttanks und Rückleiten von Aufzuchtwasser aus zumindest einem der Aufzuchttank bis zu einem minimalen Wasserstand (Wₘᵢₙ) in den Vorratstank ohne eine Pumpe unter Ausnutzung von kommunizierenden Wassersäulen zwischen den Aufzuchttanks und dem Vorratstank,
**dadurch gekennzeichnet, dass**
Wasserverluste im Vorratstank (06) durch Zuführen von frischem Aufzuchtwasser gesteuert ausgeglichen werden und das Aufzuchtwasser (09) separat in jeden einzelnen Aufzuchttank (03.1..03.n) aus dem Vorratstank (06) zugeleitet und separat aus jedem einzelnen Aufzuchttank (03.1..03.n) direkt in den Vorratstank (06) rückgeführt wird, wobei zwischen Zuleiten und Rückleiten des Aufzuchtwassers (09) zu und von jedem Aufzuchttank (03.1..03.n) über jeweils ein und dieselbe Rohrleitung (08.1..08.n) periodisch fortlaufend abgewechselt und während des Rückleitens die Pumpe (07.1...07.n) nicht betrieben wird.

2. Verfahren nach Anspruch 1,
**dadurch gekennzeichnet, dass**
der maximale Wasserstand (Wₘₐₓ) durch die Dauer des Pumpbetriebs (t_{PB}) der Pumpe (07.1...07.n) oder durch Abführen des Aufzuchtwassers (09) über einen Überlauf (10.1..10.n) in Höhe des maximalen Wasserstandes (Wₘₐₓ) in den Vorratstank (06) während des Pumpbetriebs (T_{PB}) der Pumpe (07.1..07.n) und der minimale Wasserstand (Wₘᵢₙ) durch die Dauer der Pumppause (t_{PP}) der Pumpe (07.1...07.n) oder durch den Ort des Absaugens des Aufzuchtwassers (09) aus dem Aufzuchttank (03.1..03.n) eingestellt wird.

3. Verfahren nach Anspruch 1 oder 2,
**dadurch gekennzeichnet, dass**
das Zuleiten und Rückleiten des Aufzuchtwassers (09) automatisch gesteuert wird.

4. Verfahren nach zumindest einem der vorangehenden Ansprüche,
**dadurch gekennzeichnet, dass**
das Aufzuchtwasser (09) unterhalb des Wasserspiegels (18) in den Aufzuchttank zugeleitet wird.

5. Aufzuchtvorrichtung zur Durchführung des Verfahrens nach zumindest einem der vorangehenden Ansprüche für eine Aufzucht von Wassertieren mit mehreren zumindest übereinander angeordneten, nach oben offenen Aufzuchttanks, zumindest einem Vorratstank zur Bevorratung von Aufzuchtwasser, wobei der Vorratstank unterhalb der Aufzuchttanks angeordnet ist, mit einer Zuleitung für das Aufzuchtwasser aus dem Vorratstank in zumindest einen Aufzuchttank, wobei die Zuleitung mit nur einer Rohröffnung in den Aufzuchttank hineinragt, einer Rückleitung für das Aufzuchtwasser aus zumindest einem Aufzuchttank in den Vorratstank, und mit zumindest einer Pumpe in der Zuleitung, wobei in der Rückleitung kommunizierende Wassersäulen und keine elektrisch betriebenen Fördermittel angeordnet sind,
**dadurch gekennzeichnet, dass**
die Aufzuchttanks (03.1..03.n) jeweils mehrere ebenfalls nach oben offene, wasserdurchlässigen Abteile (04.1..04.n) zur separaten Hälterung der Wassertiere (05) aufweisen, dass eine Steuerungsvorrichtung (13) sowie eine Zulaufleitung (12) für frisches Aufzuchtwasser in den Vorratstank (06) vorgesehen ist und dass zwischen der Pumpe (07.1...07.n) und jedem Aufzuchttank (03.1..03.n) eine Rohrleitung (08.1..08.n) angeordnet ist, die mit keinem weiteren Aufzuchttank (03.1..03.n) verbunden ist, und dass die Steuerungsvorrichtung (13) mit der Pumpe (07) verbunden und so ausgebildet ist, dass die Pumpe (07.1...07.n) periodisch intermittierend zwischen Pumpbetrieb (t_{PB}) und Pumppausen (t_{PP}) betreibbar ist, wobei jede Rohrleitung (08.1..08.n) im Pumpbetrieb (t_{PB}) als Zuleitung (14.1...14.n) und in den Pumppausen (t_{PP}) als Rückleitung (15.1...15.n) genutzt ist, die Rohröffnungen (17) unmittelbar unterhalb eines minimalen Wasserstandes (Wₘᵢₙ) angeordnet und Wandungen (30) der Abteile (04) höher als ein maximaler Wasserstand (Wₘₐₓ) in den Aufzuchttanks (03.1...03.n) sind.

6. Aufzuchtvorrichtung nach Anspruch 5,
**dadurch gekennzeichnet, dass**
die Pumpe (07.1...07.n) eine reibungsarm entgegen der Förderrichtung betreibbare Fördereinrichtung (20) aufweist, wobei das Aufzuchtwasser (09) in der Rückleitung (15.1..15.n) über die Pumpe (07.1...07.n) in der Pumppause (t_{PP}) in den Vorratstank (06) geleitet wird.

7. Aufzuchtvorrichtung nach Anspruch 5,
**dadurch gekennzeichnet, dass**
hinter der Pumpe (07.1...07.n) in Richtung der Aufzuchttanks (03.1..03.n) ein gemeinsamer Rohrleitungsabschnitt (21) mit einem Rohrverteiler (22) zu den Rohrleitungen (08.1..08.n) der Aufzuchttanks (03.1..03.n) angeordnet ist.

8. Aufzuchtvorrichtung nach Anspruch 7,
**dadurch gekennzeichnet, dass**
in dem gemeinsamen Rohrleitungsabschnitt (21) ein Zweiwegeventil (23) mit einer Durchlass- und einer Auslassposition (V_{D}, V_{A}) angeordnet ist, das über die Steuerungseinrichtung (13) im Pumpbetrieb (t_{PB}) auf die Durchlassposition (V_{D}) und in den Pumppausen (t_{PP}) auf die Auslassposition (V_{A}) geschaltet ist, wobei die Auslassposition (V_{A}) mit dem Vorratstank (06) und/oder einem weiteren Behälter (25) zur Entsorgung des Aufzuchtwassers (09) verbunden ist.

9. Aufzuchtvorrichtung nach Anspruch 8,
**dadurch gekennzeichnet, dass**
zwischen der Auslassposition (V_{A}) des Zweiwegeventils (23) und dem Vorratstank (06) eine Filteranlage (26) angeordnet ist.

10. Aufzuchtvorrichtung nach zumindest einem der vorangehenden Ansprüche 5-9,
**dadurch gekennzeichnet, dass**
die Steuerungsvorrichtung (13) ein Zeitschaltrelais (16) aufweist, mit dem mehrere Pumpen (07.1..07.n) gesteuert werden können.

11. Aufzuchtvorrichtung nach zumindest einem der vorangehenden Ansprüche 5-10,
**dadurch gekennzeichnet, dass**
die zumindest eine Pumpe (07.1...07.n) einer Anzahl (n) Aufzuchttanks (03.1..03.n) zugeordnet ist und dass für je weitere (n) Aufzuchttanks (03.1..03.n) eine weitere Pumpe (07.1...07.n) vorgesehen ist, wobei die Pumpen (07.1...07.n) in einem gemeinsamen oder mehreren verschiedenen Vorratstanks (06.1..06.n) angeordnet sind.

12. Aufzuchtvorrichtung nach Anspruch 11
**dadurch gekennzeichnet, dass**
die Anzahl (n) Aufzuchttanks (03.1..03.n) in zumindest zwei nebeneinander liegenden Stöcken (27.1..27.n) angeordnet sind und die Steuereinrichtung (13) so ausgebildet ist, dass die (n) Pumpen (07.1...07.n) alternierend betrieben werden.

13. Aufzuchtvorrichtung nach zumindest einem der vorangehenden Ansprüche 5-12,
**dadurch gekennzeichnet, dass**
jeder Aufzuchttank (03.1..03.n) oberhalb eines maximalen Wasserstands (Wₘₐₓ) eine Überlaufleitung (10.1...10.n) aufweist, die in den Vorratstank (06) geführt ist.

14. Aufzuchtvorrichtung nach zumindest einem der vorangehenden Ansprüche 5-13,
**dadurch gekennzeichnet, dass**
jedes wasserdurchlässige Abteil (04.1...04.n) einen wasserdurchlässigen Boden (31) und wasserundurchlässige Wandungen (30) aufweist, wobei die Wandungen (30) höher ausgebildet sind als der maximale Wasserstand (Wₘₐₓ) in den Aufzuchttanks (03.1..03.n).

15. Aufzuchtvorrichtung nach zumindest einem der vorangehenden Ansprüche 5-14,
**dadurch gekennzeichnet, dass**
die Rohrleitungen (08.1..08.n) über die seitlichen Wandungen (19) der Aufzuchttank (03.1..03.n) hinübergeführt sind.

## Claims

1. A method for achieving water exchange in a plurality of breeding tanks (03), which are arranged above one another, for caging aquatic animals with supply of breeding water (09) up to a maximum water level (Wₘₐₓ) from a storage tank (06) arranged below the breeding tank for stocking breeding water by means of a pump (07) to at least one of the breeding tanks and returning breeding water from at least one of the breeding tanks to a minimum water level (Wₘᵢₙ) to the storage tank without a pump whilst making use of communicating water columns between the breeding tanks and the storage tank,
**characterized in that**
water losses in the storage tank (06) can be compensated by supplying fresh breeding water in a controlled manner and the breeding water (09) separately to each individual breeding tank (03.1 ..03.n) from the storage tank (06) and returned separately from each individual breeding tank (03.1..03.n) directly to the storage tank (06), wherein there is continuous alternation between supplying and returning the breeding water (09) to and from each breeding tank (03.1..03.n) via one and the same pipeline (08.1..08.n) in each case periodically and the pump (07.1...07.n) is not operated during returning.

2. The method according to Claim 1,
**characterized in that**
the maximum water level (Wₘₐₓ) is set by the duration of pump operation (t_{PB}) of the pump (07.1 ...07.n) or by purging the breeding water (09) via an overflow (10.1..10.n) at the height of the maximum water level (Wₘₐₓ) to the storage tank (06) during pump operation (T_{PB}) of the pump (07.1..07.n), and the minimum water level (Wₘᵢₙ) is set by the duration of the pump pause (t_{PP}) of the pump (07.1...07.n) or by the location of the suction of the breeding water (09) from the breeding tank (03.1..03.n).

3. The method according to Claim 1 or 2,
**characterized in that**
the supply and return of the breeding water (09) is controlled automatically.

4. The method according to at least one of the preceding claims,
**characterized in that**
the breeding water (09) is supplied to the breeding tank below the water level (18).

5. A breeding device for carrying out the method according to at least one of the preceding claims, for breeding of aquatic animals with a plurality of breeding tanks, which are open at the top and arranged at least above one another, at least one storage tank for stocking breeding water, the storage tank being arranged below the breeding tank, with a supply line for the breeding water from the storage tank to at least one breeding tank, the supply line projecting by way of only one pipe opening into the breeding tank, a return line for the breeding water from at least one breeding tank to the storage tank, and with at least one pump in the supply line, communicating water columns and no electrically operated conveying means being arranged in the return line,
**characterized in that**
the breeding tanks (03.1.,03.n) in each case have a plurality of water-permeable compartments (04.1..04.n), which are likewise open at the top, for the separate caging of the aquatic animals (05), **in that** a control device (13) and a feed line (12) for fresh breeding water are provided in the storage tank (06) and **in that** a pipeline (08.1..08.n) is arranged between the pump (07.1...07.n) and each breeding tank (03.1..03.n), which pipeline is not connected to a further breeding tank (03.1..03.n), and **in that** the control device (13) is connected to the pump (07) and constructed in such a manner that the pump (07.1...07.n) can be operated periodically intermittently between pump operation (t_{PB}) and pump pauses (t_{PP}), wherein each pipeline (08.1..08.n) is used as supply line (14.1...14.n) during pump operation (t_{PB}) and as return line (15.1...15.n) in pump pauses(t_{PP}), the pipelines (17) are arranged directly below a minimum water level (Wₘᵢₙ) and walls (30) of the compartments (04) are higher than a maximum water level (Wₘₐₓ) in the breeding tanks (03.1 ...03.n).

6. The breeding device according to Claim 5,
**characterized in that**
the pump (07.1...07.n) has a conveyor (20), which can be operated in a low-friction manner counter to the conveying direction, wherein the breeding water (09) is conveyed in the return line (15.1..15.n) to the storage tank (06) via the pump (07.1...07.n) in the pump pause (t_{PP}).

7. The breeding device according to Claim 5,
**characterized in that**
a common pipeline section (21) with a pipe distributor (22) to the pipelines (08.1..08.n) of the breeding tanks (03.1..08.n.) is arranged behind the pump (07.1...07.n) in the direction of the breeding tank (03.1..03.n).

8. The breeding device according to Claim 7,
**characterized in that**
a two-way valve (23) with a passage position and an outlet position (V_{D}, V_{A}) is arranged in the common pipeline section (21), which two-way valve is switched via the control device (13) to the passage position (V_{D}) during pump operation (t_{PB}) and is switched to the outlet position (V_{A}) during the pump pauses (t_{PP}), wherein the outlet position (V_{A}) is connected to the storage tank (06) and/or a further container (25) for draining the breeding water (09).

9. The breeding device according to Claim 8,
**characterized in that**
a filter system (26) is arranged between the outlet position (V_{A}) of the two-way valve (23) and the storage tank (06).

10. The breeding device according to at least one of the preceding Claims 5-9,
**characterized in that**
the control device (13) has a time switching relay (16), using which a plurality of pumps (07.1..07.n) can be controlled.

11. The breeding device according to at least one of the preceding Claims 5-10,
**characterized in that**
the at least one pump (07.1...07.n) is assigned to a number (n) of breeding tanks (03.1..03.n) and **in that** a further pump (07.1...07.n) is provided for each further (n) breeding tanks (03.1..03.n), wherein the pumps (07.1 ...07.n) are arranged in a common storage tank or a plurality of different storage tanks (06.1..06.n).

12. The breeding device according to Claim 11,
**characterized in that**
the number (n) of storage tanks (03.1..03.n) are arranged in at least two floors (27.1..27.n), which are located next to one another, and the control device (13) is constructed in such a manner that the (n) pumps (07.1...07.n) are operated in an alternating manner.

13. The breeding device according to at least one of the preceding Claims 5-12,
**characterized in that**
each breeding tank (03.1..03.n) has an overflow line (10.1...10.n) above a maximum water level (Wₘₐₓ), which overflow line is routed into the storage tank (06).

14. The breeding device according to at least one of the preceding Claims 5-13,
**characterized in that**
each water-permeable compartment (04.1 ...04.n) has a water-permeable floor (31) and water-impermeable walls (30), wherein the walls (30) are constructed to be higher than the maximum water level (Wₘₐₓ) in the breeding tanks (03.1..03.n).

15. The breeding device according to at least one of the preceding Claims 5-14,
**characterized in that**
the pipelines (08.1..08.n) are guided over the side walls (19) of the breeding tanks (03.1..03.n).

## Revendications

1. Procédé destiné à provoquer un échange d'eau dans plusieurs réservoirs d'élevage (03) superposés destinés à la détention d'animaux aquatiques, avec des conduits d'alimentation d'eau d'élevage (09) jusqu'à un niveau d'eau maximum (Wₘₐₓ) à partir d'un réservoir de stockage (06) placé en-dessous des réservoirs d'élevage, pour l'approvisionnement d'eau d'élevage par l'intermédiaire d'une pompe (07) dans au moins l'un des réservoirs d'élevage et pour renvoyer de l'eau d'élevage à partir d'au moins l'un des réservoirs d'élevage jusqu'à un niveau d'eau minimum (Wₘᵢₙ) dans le réservoir de stockage sans aucune pompe, en utilisant des colonnes d'eau communicantes entre les réservoirs d'élevage et le réservoir de stockage,
**caractérisé en ce que**
des pertes d'eau dans le réservoir de stockage (06) sont compensées de marnière commandée par alimentation d'eau d'élevage fraîche et **en ce que** l'eau d'élevage (09) est alimentée séparément dans chacun des réservoirs d'élevage (03.1, ..03.n) à partir du réservoir de stockage (06) et est renvoyée séparément à partir de chacun des réservoirs d'élevage (03.1, ..03.n), directement dans le réservoir de stockage (06), sachant qu'il est alterné périodiquement en continu entre l'alimentation et le retour de l'eau d'élevage (09) vers et à partir de chaque réservoir d'élevage (03.1, ..03.n) par l'intermédiaire de chaque fois une seule et même canalisation (08.1 .. 08.n) et pendant le renvoi, la pompe (07.1 ..07.n) ne fonctionne pas.

2. Procédé selon la revendication 1,
**caractérisé en ce**
**qu'**on règle le niveau d'eau maximum (Wₘₐₓ) par la durée de fonctionnement de pompe (t_{PB}) de la pompe (07.1 ..07.n) ou par évacuation dans le réservoir de stockage (06) de l'eau d'élevage (09) via un trop-plein (10.1..10.n) à hauteur du niveau d'eau maximum (Wₘₐₓ) pendant le fonctionnement de pompe (t_{PB}) de la pompe (07.1 ..07.n) et on règle le niveau d'eau minimum (Wₘᵢₙ) par la durée de pause de pompe (t_{PP}) de la pompe (07.1 ..07.n) ou par l'endroit de l'aspiration de l'eau d'élevage (09) hors du réservoir d'élevage (03.1, ..03.n).

3. Procédé selon la revendication 1 ou la revendication 2,
**caractérisé en ce que** l'alimentation et le retour de l'eau d'élevage (09) sont automatiquement commandés.

4. Procédé selon au moins l'une quelconque des revendications précédentes,
**caractérisé en ce que** l'eau d'élevage (09) est alimentée dans le réservoir d'élevage en-dessous du niveau d'eau (18).

5. Dispositif d'élevage destiné à réaliser le procédé selon au moins l'une quelconque des revendications précédentes pour un élevage d'animaux aquatiques, avec plusieurs réservoirs d'élevage superposés, ouverts vers le haut, au moins un réservoir de stockage pour approvisionner de l'eau d'élevage, le réservoir de stockage étant placé en-dessous des réservoirs d'élevage, avec un conduit d'alimentation pour l'eau d'élevage hors du réservoir de stockage dans au moins un réservoir d'élevage, le conduit d'alimentation ne saillant que par un orifice tubulaire dans le réservoir d'élevage, un conduit de retour pour l'eau d'élevage à partir d'au moins un réservoir d'élevage dans le réservoir de stockage et avec au moins une pompe dans le conduit d'alimentation, dans le conduit de retour étant placés des colonnes d'eau communicantes et aucun moyen de transport à fonctionnement électrique,
**caractérisé en ce que** les réservoirs d'élevage (03.1, ..03.n) comportent plusieurs compartiments (04.1 .. 04.n) perméables à l'eau, également ouverts vers le haut, pour la détention séparée des animaux aquatiques (05), **en ce qu'**il est prévu dans le réservoir de stockage (06) un dispositif de commande (13), ainsi qu'un conduit d'arrivée (12) pour de l'eau d'élevage fraîche dans le réservoir de stockage (06) et **en ce qu'**entre la pompe (07.1 ..07.n) et chaque réservoir d'élevage (03.1, ..03.n) est placée une canalisation (08.1..08.n) qui n'est reliée avec aucun réservoir d'élevage (03.1, ..03.n) supplémentaire et **en ce que** le dispositif de commande (13) est relié avec la pompe (07) et est conçu de telle sorte que la pompe (07.1 ..07.n) peut fonctionner périodiquement par intermittence entre fonctionnement de pompe (t_{PB}) et pauses de pompe (t_{PP}), chaque canalisation (08.1..08.n) étant utilisée en tant que conduit aller (14.1..14.n) pendant le fonctionnement de la pompe (t_{PB}) et en tant que conduit retour (15..15.n) pendant les pauses de la pompe (t_{PP}), les orifices tubulaires (17) sont placés directement en-dessous d'un niveau d'eau minimum (Wₘᵢₙ) et des parois (30) des compartiments (04) sont plus hautes qu'un niveau d'eau maximum (Wₘₐₓ) dans les réservoirs d'élevage (03.1, ..03.n).

6. Dispositif d'élevage selon la revendication 5, **caractérisé en ce que** la pompe (07.1..07.n) comporte un système de transport (20) pouvant fonctionner avec de faibles frictions à l'encontre du sens de transport, l'eau d'élevage (09) dans le conduit retour (15.1..115.n) étant dirigée par l'intermédiaire de la pompe (07.1..07.n) pendant la pause de pompe (t_{PP}) dans le réservoir de stockage (06).

7. Dispositif d'élevage selon la revendication 5,
**caractérisé en ce que** derrière la pompe (07.1..07.n), en direction du réservoir d'élevage (03.1..03.n) est placé un tronçon de canalisation (21) commun, avec une tubulure (22) donnant sur les canalisations (08.1..08.n) des réservoirs d'élevage (03.1..03.n).

8. Dispositif d'élevage selon la revendication 7,
**caractérisé en ce que** dans le tronçon de canalisation (21) commun est placée une soupape à deux voies (23) avec une position de passage et une position de sortie (V_{D}, V_{A}) qui par l'intermédiaire du dispositif de commande (13) est commutée sur la position de passage (V_{D}) pendant le fonctionnement de la pompe (T_{PB}) et sur la position de sortie (V_{A}) pendant les pauses de la pompe (t_{PP}), la position de sortie (V_{A}) étant reliée avec le réservoir de stockage (06) et/ou un réservoir (25) supplémentaire, pour l'évacuation de l'eau d'élevage (09).

9. Dispositif d'élevage selon la revendication 8,
**caractérisé en ce qu'**entre la position de sortie (VA) de la soupape à deux voies (23) et le réservoir de stockage (06) est placé un système de filtration (26).

10. Dispositif d'élevage selon au moins l'une quelconque des revendications 5 à 9 précédentes,
**caractérisé en ce que** le dispositif de commande (13) . comporte un relais tout-ou-rien temporisé (16), à l'aide duquel plusieurs pompes (07.1..07.n) peuvent être commandées.

11. Dispositif d'élevage selon au moins l'une quelconque des revendications 5 à 10 précédentes,
**caractérisé en ce que** l'au moins une pompe (07.1..07.n) est associée à un nombre (n) de réservoirs d'élevage (03.1..03.n) et **en ce que** pour chaque réservoir d'élevage (03.1..03.n) supplémentaire est prévue une pompe supplémentaire (07.1..07.n), les pompes (07.1..07.n) étant placées dans un réservoir de stockage (06.1..06.n) commun ou dans plusieurs différents.

12. Dispositif d'élevage selon la revendication 11,
**caractérisé en ce que** le nombre (n) des réservoirs d'élevage (03.1..03.n) sont placés dans au moins deux étages (27.1..27.n) adjacents et le dispositif de commande (13) est conçu de telle sorte que les (n) pompes (07.1..07.n) fonctionnent en alternance.

13. Dispositif d'élevage selon au moins l'une quelconque des revendications 5 à 12 précédentes,
**caractérisé en ce qu'**au dessus d'un niveau d'eau maximum (Wₘₐₓ), chaque réservoir d'élevage (03.1..03.n) comporte un conduit de trop-plein (10.1..10.n) qui est mené dans le réservoir de stockage (06).

14. Dispositif d'élevage selon au moins l'une quelconque des revendications 5 à 13 précédentes,
**caractérisé en ce que** chaque compartiment (04.1..04.n) perméable à l'eau comporte un fond inférieur (31) perméable à l'eau et des parois (30) perméables à l'eau, les parois (30) étant conçues en étant plus hautes que le niveau d'eau maximum (Wₘₐₓ) dans les réservoirs d'élevage (03.1..03.n).

15. Dispositif d'élevage selon au moins l'une quelconque des revendications 5 à 14 précédentes,
**caractérisé en ce que** les canalisations (08.1..08.n) sont tirées par-dessus les parois latérales (19) des réservoirs d'élevage (03.1..03.n).
